(19) Europäisches Patentamt
European Patent Office
Office européen des brevets

(11) Veröffentlichungsnummer: **0 502 529 A2**

(12) # EUROPÄISCHE PATENTANMELDUNG

(21) Anmeldenummer: **92103786.7**

(51) Int. Cl.5: **F16D 13/68**

(22) Anmeldetag: **05.03.92**

(30) Priorität: **06.03.91 DE 4107126**

(43) Veröffentlichungstag der Anmeldung: **09.09.92 Patentblatt 92/37**

(84) Benannte Vertragsstaaten: **DE ES FR GB**

(71) Anmelder: **Fichtel & Sachs AG**
**Ernst-Sachs-Strasse 62**
**W-8720 Schweinfurt(DE)**

(72) Erfinder: **Feser, Erich, Dipl.-Ing. (FH)**
**Simonsweg 1**
**W-8781 Gössenheim(DE)**
Erfinder: **Jeppe, Harald, Dipl.-Ing. (FH)**
**Schwanbergstrasse 20**
**W-8720 Schweinfurt(DE)**
Erfinder: **Fischer, Matthias, Dipl.-Ing. (FH)**
**Bayernstrasse 30**
**W-8735 Eltingshausen(DE)**

(74) Vertreter: **Liska, Horst, Dr.-Ing. et al**
**Patentanwälte H. Weickmann, K. Fincke, F.A. Weickmann, B. Huber, .H. Liska, J. Prechtel, B. Böhm, Kopernikusstrasse 9 Postfach 86 08 20**
**W-8000 München 86(DE)**

(54) **Kupplungsscheibe für eine Kraftfahrzeug-Reibungskupplung.**

(57) Es wird eine Kupplungsscheibe für eine Kraftfahrzeug-Reibungskupplung vorgeschlagen, deren für den Leerlaufbetrieb bemessener Drehschwingungsdämpfer (31) radial zwischen einer Nabe (1) und Federn (11) eines für den Lastbetrieb bemessenen Drehschwingungsdämpfers (11) der Kupplungsscheibe angeordnet ist. Der Leerlauf-Drehschwingungsdämpfer (31) ist axial zwischen einer Nabenscheibe (19) und einer der über die Federn (11) drehelastisch mit der Nabenscheibe (19) gekuppelten Seitenscheiben (9) des Last-Drehschwingungsdämpfers (11) angeordnet. Der Leerlauf-Drehschwingungsdämpfer (31) umfaßt ein aus Kunststoffmaterial hergestelltes Eingangsteil (33), das drehfest mit der über eine Verzahnung (21) mit Drehspiel, ansonsten jedoch drehfest mit der Nabe (1) gekuppelten Nabenscheibe (19) verbunden ist. Das Ausgangsteil (35) des Leerlauf-Drehschwingungsdämpfers (31) besteht ebenfalls aus Kunststoff und ist drehfest mit der Nabe (1) verbunden. Schraubenfedern (39), die in Taschen des Ausgangsteils (35) angeordnet sind, kuppeln das Ausgangsteil (35) drehelastisch mit dem Eingangsteil (33). An dem Eingangsteil (33) sind hierzu Paare von Fortsätzen (87) angeformt, die die Federn (39) zwischen sich einschließen und die durch die Taschen hindurch an der Nabenscheibe (19) abgestützt sind. Am Außenumfang des Eingangsteils (33) sind zusätzliche Stützelemente (89) angeformt, die in Öffnungen (113) der Nabenscheibe eingreifen. Das Eingangsteil (33) bildet zugleich eine Reibfläche (45) einer für den Lastbetrieb bemessenen Reibeinrichtung. Eine Reibfläche (49) einer für den Leerlaufbetrieb bemessenen Reibeinrichtung ist an einem rohrförmigen Ansatz (47) des Ausgangsteils (35) angeformt. Für die Montage sind an den Fortsätzen (87) des Eingangsteils (33) Einführschrägen und Rastschultern angeformt, die die Feder (39) bereits vor dem Zusammenbau halten. Über Führungsflächen (81, 117, 119) an dem Eingangsteil (33), dem Ausgangsteil (35) und der Nabenscheibe (19) können die Komponenten des Leerlauf-DrehschwingungsdämpferS (31) während der Montage relativ zum Nabenflansch (19) mittels eines Führungswerkzeugs (83) ausgerichtet werden.

EP 0 502 529 A2

Fig. 1
17
15
19
25
27
29
11
23
7
89
113
9
43
87
41
33
55
45
53
37
1
3
5
21
47
49
51
50
39
31
87
119
35
117
83
81
13

Die Erfindung betrifft eine Kupplungsscheibe für eine Kraftfahrzeug-Reibungskupplung und insbesondere eine Kupplungsscheibe mit einem für den Lastbetrieb bemessenen Last-Drehschwingungsdämpfer und einem für den Leerlaufbetrieb bemessenen Leerlauf-Drehschwingungsdämpfer.

Aus dem US-Patent 4 700 822 ist eine Kupplungsscheibe für eine Kraftfahrzeug-Reibungskupplung bekannt, an deren mit der Getriebeeingangswelle zu kuppelnden Nabe zwei in axialem Abstand voneinander angeordnete, durch Nieten fest miteinander verbundene Seitenscheiben eines für den Lastbetrieb bemessenen Last-Schwingungsdämpfers drehbar gelagert sind. Axial zwischen den beiden Seitenscheiben, von denen eine zugleich die Kupplungsreibbeläge trägt, ist eine Nabenscheibe angeordnet, die über eine Verzahnung mit einem begrenzten Drehspiel ansonsten jedoch drehfest mit der Nabe verbunden ist. Für den Lastbetrieb bemessene Lastfedern kuppeln die das Eingangsteil des Lastdämpfers bildenden Seitenscheiben drehelastisch mit der das Ausgangsteil des Lastdämpfers bildenden Nabenscheibe. Radial zwischen dem Anordnungsbereich der Lastfedern und der Nabe ist axial zwischen einer der Seitenscheiben und der Nabenscheibe ein für den Leerlaufbetrieb bemessener Leerlauf-Drehschwingungsdämpfer untergebracht, der wiederum zwei drehfest miteinander verbundene Seitenscheiben sowie eine zwischen den Seitenscheiben angeordnete Nabenscheibe umfaßt, die über für den Leerlaufbetrieb bemessene Leerlauf-Federn drehelastisch mit den Seitenscheiben gekuppelt ist. Die Seitenscheiben wie auch die Nabenscheibe des Leerlaufdämpfers bestehen aus Kunststoffmaterial. Die Seitenscheiben sind durch eine Zapfenverbindung miteinander und mit der Nabenscheibe des Lastdämpfers drehfest verbunden. Sie bilden die Eingangskomponenten des Leerlaufdämpfers, dessen Ausgangskomponente durch die drehfest auf einer Verzahnung der Nabe sitzende Nabenscheibe gebildet wird. Eine der Seitenscheiben des Leerlaufdämpfers liegt in Reibkontakt an der ihr benachbarten Seitenscheibe des Lastdämpfers an und bildet ein Reibelement einer für den Lastbetrieb bemessenen Last-Reibeinrichtung, deren Tellerfeder für die axiale Anpreßkraft sorgt. Die Nabenscheibe des Leerlaufdämpfers stützt sich einerseits an einer axialen Schulter der Nabe ab und ist andererseits mit einem rohrförmigen Fortsatz versehen, dessen axiale Stirnfläche ebenfalls an der genannten einen Seitenscheibe des Lastdämpfers anliegt. Eine auf der dem Leerlaufdämpfer axial abgewandten Seite der Nabenscheibe angeordnete Wellfeder, die zwischen einer axialen Schulter der Nabe und der anderen der beiden Seitenscheiben des Lastdämpfers eingespannt ist, spannt die Stirnfläche des rohrförmigen Ansatzes der Nabenscheibe des Leerlaufdämpfers zur Erzeugung einer Grundreibung gegen die genannte erste Seitenscheibe des Lastdämpfers. Der Leerlaufdämpfer der bekannten Kupplungsscheibe besteht aus vergleichsweise vielen Einzelteilen, die einigen Montageaufwand erfordern.

Aus der DE-A-36 16 163 ist eine weitere Kupplungsscheibe bekannt, deren für den Leerlaufbetrieb bemessener Leerlaufdämpfer wiederum radial zwischen dem Anordnungsbereich von Last-Federn und der Nabe der Kupplungsscheibe einerseits sowie einer der Seitenscheiben und der mit der Nabe über eine Verzahnung verbundenen Nabenscheibe des Lastdämpfers andererseits untergebracht ist. Der Leerlaufdämpfer hat ein integrales, aus Kunststoff hergestelltes Eingangsteil, das in mehreren Taschen für den Leerlaufbetrieb bemessene Federn enthält und über Vorsprünge, die in Öffnungen der Nabenscheibe eingreifen, drehfest mit der Nabenscheibe verbunden ist. Axial zwischen dem Eingangsteil und der Nabenscheibe des Lastdämpfers ist ein aus Blech gefertigtes Ausgangsteil des Leerlaufdämpfers angeordnet, das über die Verzahnung der Nabe drehfest mit der Nabe verbunden ist und in Umfangsrichtung beiderseits jeder Leerlauf-Feder in die Tasche eingreifende Fortsätze hat, die das Ausgangsteil drehelastisch mit dem Eingangsteil kuppeln. In Umfangsrichtung sind die Taschen des Eingangsteils durch Endflächen begrenzt, die mit den Stirnenden der als Schraubenfeder ausgebildeten Leerlauffedern zusammenwirken. An die Endflächen schließen sich Taschenverlängerungen an, in die die Fortsätze des Ausgangsteils bei einer Relativdrehung von Eingangsteil und Ausgangsteil hinein ausweichen. Das Eingangsteil liegt mit einer ebenen Fläche an der ihm benachbarten Seitenscheibe des Lastdämpfers an und bildet zugleich ein Reibelement einer für den Lastbetrieb bemessenen Reibeinrichtung, deren axial wirkende Feder zwischen der Nabenscheibe und der anderen Seitenscheibe des Lastdämpfers angeordnet ist. Bei dieser Kupplungsscheibe sind für die Erzeugung einer Leerlauf- oder Grundreibung zusätzliche Reibringe erforderlich. Da die Komponenten des Leerlaufdämpfers lose sind, können sich Montageprobleme ergeben.

Es ist Aufgabe der Erfindung, eine Kupplungsscheibe für eine Kraftfahrzeug-Reibungskupplung anzugeben, die sich bei geringer Anzahl von Komponenten ihres Leerlaufdämpfers preiswert herstellen und leicht montieren läßt.

Die Erfindung geht aus von einer Kupplungsscheibe für eine Kraftfahrzeug-Reibungskupplung, die folgende Merkmale umfaßt:

Eine Nabe, die eine Drehachse definiert,

einen für den Lastbetrieb bemessenen Last-Drehschwingungsdämpfer mit zwei in axialem Abstand voneinander angeordneten, fest miteinander verbundenen, gleichachsig drehbar auf der Nabe gelagerten Seitenscheiben,
einer axial zwischen den Seitenscheiben angeordneten Nabenscheibe, die insbesondere über eine Verzahnung drehfest, jedoch mit einem begrenzten Drehspiel mit der Nabe verbunden ist und mehreren in Fenstern der Seitenscheibe einerseits und der Nabenscheibe andererseits sitzenden, in Umfangsrichtung verteilt angeordneten, für den Lastbetrieb bemessenen, insbesondere als Schraubenfedern ausgebildeten Last-Federn,
einen für den Leerlaufbetrieb bemessenen, innerhalb des begrenzten Drehspiels der Nabenscheibe relativ zur Nabe wirksamen Leerlauf-Drehschwingungsdämpfer mit einem drehfest mit der Nabenscheibe verbundenen Eingangsteil aus Kunststoffmaterial,
einen insbesondere über eine Verzahnung drehfest mit der Nabe verbundenen Ausgangsteil und wenigstens einer diese Teile drehelastisch miteinander kuppelnden, für den Leerlaufbetrieb bemessenen, insbesondere als Schraubenfeder ausgebildeten Leerlauf-Feder, wobei eines dieser beiden Teile eine in Umfangsrichtung langgestreckte, durch Endflächen in Umfangsrichtung begrenzte Tasche für jede Leerlauf-Feder und das andere dieser beiden Teile in Umfangsrichtung im Abstand angeordnete, axial abstehende, in jede Tasche paarweise eingreifende Fortsätze aufweist, die zusammen mit den Endflächen die Leerlauf-Feder zwischen sich einschließen, wobei sich an jede Tasche in Umfangsrichtung beiderseits bogenförmige Taschenverlängerungen anschließen, in die hinein die Fortsätze bei einer Relativdrehung von Eingangsteil und Ausgangsteil ausweichen, wobei das Eingangsteil und das Ausgangsteil einerseits radial zwischen der Nabe und dem Anordnungsbereich der Last-Federn und andererseits axial zwischen der Nabenscheibe und einer ersten der beiden Seitenscheiben angeordnet sind und das Ausgangsteil im wesentlichen axial zwischen dem Eingangsteil und der Nabenscheibe liegt, und wobei das Eingangsteil eine ebene Reibfläche bildet, mit der es in Reibkontakt an der ersten Seitenscheibe anliegt, sowie auf einem, verglichen mit dem Durchmesser, auf dem die Fortsätze angeordnet sind, größeren Durchmesser mehrere in Umfangsrichtung gegeneinander versetzte Stützelemente aufweist, die zur drehfesten Verbindung des Eingangsteil mit der Nabenscheibe in Öffnungen der Nabenscheibe axial eingreifen und an der Nabenscheibe anliegende Axialanschläge umfassen, eine für den Lastbetrieb bemessene Last-Reibeinrichtung mit einer zumindest die Reibfläche des Eingangsteils und die erste Seitenscheibe axial gegeneinander spannende, axial wirkende Feder und an einer der Seitenscheiben gehaltene Kupplungsreibbeläge.

Bei einer solchen Kupplungsscheibe ist unter einem ersten Aspekt der Erfindung vorgesehen, daß das Ausgangsteil einteilig aus Kunststoffmaterial hergestellt ist, an einem Axialanschlag der Nabe in Richtung zur Nabenscheibe hin fixiert ist und die Taschen enthält und daß die Fortsätze in Umfangsrichtung gegen die Stützelemente versetzt zusammen mit den Stützelementen einteilig an dem Eingangsteil angeformt sind. Zur Führung und Steuerung der Leerlauf-Feder bzw. -Federn werden lediglich zwei vollständig aus Kunststoff herstellbare Bauteile benötigt, die aufgrund ihrer Gestaltung sowohl axial als auch radial wenig Bauraum beanspruchen und sich leicht montieren lassen.

Die Tasche und die Taschenverlängerungen sind in einer bevorzugten Ausführungsform zur Nabenscheibe hin durchbrochen, wobei die Fortsätze des Eingangsteils durch die Tasche und die Taschenverlängerungen axial hindurchreichen und mit ihren Stirnenden an der Nabenscheibe axial abgestützt sind. Auf diese Weise stützt sich das die Axialkräfte der Last-Reibeinrichtung aufnehmende Eingangsteil nicht nur über die Anschlagflächen der Stützelemente, sondern auch über die Fortsätze an der Nabenscheibe ab, was eine großflächige Abstützung des Eingangsteils gewährleistet und eine gleichmäßige Anlage an der Seitenscheibe sicherstellt, selbst wenn das Eingangsteil verhältnismäßig geringe Materialquerschnitte hat.

Unabhängig von der vorteilhaften Abstützung des Eingangsteils sind im Bereich der Taschen und Taschenverlängerungen vorgesehene, axiale Durchbrechungen von Vorteil, insbesondere wenn sie zwischen den Endflächen jeder Tasche vorgesehen sind und eine radiale Höhe im Bereich der Endflächen haben, die etwa gleich dem halben Außendurchmesser der Leerlauf-Feder sind. Durch Durchbrechungen dieser Art wird die Herstellung des Ausgangsteils erleichtert, indem allzu dünne Materialquerschnitte vermieden werden, und zum anderen kann das Massenträgheitsmoment des Ausgangsteils verringert werden. Die axiale Durchbrechung der Tasche ist zweckmäßigerweise radial innen durch eine in Umfangsrichtung geradlinig verlaufende Fläche und radial außen durch eine um die Drehachse herum gewölbte Fläche begrenzt, womit sie dem Bewegungsablauf der Leerlauf-Feder und der Fortsätze angepaßt ist. Die Taschenverlängerungen hingegen sind bevorzugt als axial durchgehende, durch radial innere und radial äußere Kreisbogenflächen begrenzte Schlitze ausgebildet, in die die Durchbrechung der Tasche übergeht.

Ein zweiter Aspekt der Erfindung, der sich auch dann einsetzen läßt, wenn die zur Aufnahme der Leerlauf-Federn vorgesehenen Taschen im Eingangsteil und die zur Steuerung der Leerlauf-Feder vorgesehenen Fortsätze am Ausgangsteil angeformt sind, sieht wiederum vor, daß sowohl das Eingangsteil als auch das Ausgangsteil aus Kunststoffmaterial hergestellt ist, wobei die der Tasche paarweise zugeordneten Fortsätze aufeinander zu vorstehende Nasen aufweisen, die in das Innere der als Schraubenfeder ausgebildeten Leerlauf-Feder hineinreichen. Die Schraubenfeder läßt sich damit bei der Montage auf die Fortsätze aufsetzen, was insbesondere bei Leerlauf-Dämpfern mit mehreren Federn von Vorteil ist. Die Schraubenfedern können damit an den Fortsätzen, beispielsweise des Eingangsteils, vormontiert und als vormontierte Baueinheit in die Taschen eingesetzt werden. Dies ist insbesondere dann von Vorteil, wenn, wie dies bei gestuften Drehschwingungsdämpfern üblich ist, ein Teil der Federn in Taschen sitzt, die die Feder mit Spiel in Umfangsrichtung zwischen ihren Endflächen halten.

Von besonderem Vorteil ist auch eine Ausgestaltung, bei welcher jede Nase auf ihrer axial zum freien Ende des Fortsatzes hin gelegenen Seite eine Einführschräge für das Ende der Schraubenfeder und auf ihrer dem freien Ende des Fortsatzes axial entfernt gelegenen Seite einen Rastabsatz aufweist. Dies erleichtert nicht nur bei der vorstehend erläuterten Montageweise das Einsetzen der Federn zwischen die Fortsätze, wobei die Federn über die Einführschrägen auf die Nasen und hinter deren Rastabsatz aufgeschnappt werden können, sondern ermöglicht auch den Zusammenbau des Leerlaufdämpfers in der Weise, daß die Leerlauf-Federn zuerst in die Taschen, zum Beispiel des Ausgangsteils, eingesetzt werden, worauf das andere Teil, beispielsweise das Eingangsteil, mit seinen Fortsätzen voraus auf sämtliche Federn zugleich aufgesteckt wird. Die letztgenannte Montageweise läßt sich insbesondere dann anwenden, wenn sämtliche Schraubenfedern in ihren Taschen ohne Spiel in Umfangsrichtung gehalten werden.

Die im folgenden erläuterten Varianten lassen sich unter beiden Aspekten der Erfindung vorteilhaft einsetzen. In einer zweckmäßigen Ausgestaltung ist vorgesehen, daß das Ausgangsteil jede für den Eingriff der Fortsätze bestimmte Tasche enthält und zumindest in dem die Tasche enthaltenden Durchmesserbereich als ebene Scheibe ausgeführt ist, deren axiale Dicke um ein verglichen mit der Dicke kleineres Maß größer als der halbe Außendurchmesser, der von der Tasche aufgenommenen Leerlauf-Feder ist, und daß jede Tasche in Umfangsrichtung durch Endflächen mit kreissektorförmiger Kontur begrenzt ist, deren Kreismittelpunkt angenähert einen dem genannten Maß entsprechenden Abstand von der dem Eingangsteil benachbarten Seitenfläche der Scheibe hat und deren Kreisradius etwa gleich dem halben Außendurchmesser der Leerlauf-Feder ist. Ein solches Ausgangsteil führt die Leerlauf-Federn einwandfrei sowohl in Umfangsrichtung als auch in radialer Richtung und erleichtert durch seine axial vollständig geöffnete Bauweise das Einsetzen der Federn.

Auch das Eingangsteil kann in Umfangsrichtung zwischen jedem Paar die Leerlauf-Feder haltender Fortsätze eine weitere Tasche aufweisen, die in Umfangsrichtung durch Endflächen begrenzt ist, welche eine kreissektorförmige Kontur haben, deren Radius etwa gleich dem halben Außendurchmesser der Leerlauf-Feder ist und deren Kreismittelpunkt ungefähr in der Mitte der axialen Erstrekkung der Fortsätze liegt. Auf diese Weise kann das Eingangsteil sehr dicht an das Ausgangsteil herangelegt werden, und die Fortsätze sorgen für eine symmetrische Umfassung der Stirnenden der Leerlauf-Feder. Auch die weiteren Taschen des Eingangsteils können auf der axial der Seitenscheibe zugewandten Seite in eine Durchbrechung münden, wodurch auch hier die Herstellbarkeit erleichert und das Massenträgheitsmoment abgesenkt wird.

In einer weiteren bevorzugten Ausgestaltung beider Aspekte der Erfindung kann vorgesehen sein, daß die Stützelemente und die Öffnungen der Nabenscheibe, in die sie eingreifen, angenähert rechteckförmigen Querschnitt haben und daß an zumindest einer axial verlaufenden Längsseite jedes Stützelements eine axial verlaufende Rippe angeformt ist, die die Kontur der Öffnung teilweise überdeckt und sich bei der Montage des Eingangsteils an der Nabenscheibe plastisch verformt. Auf diese Weise läßt sich das Eingangsteil vollständig spielfrei an der Nabenscheibe befestigen.

Weiterhin wird vorgeschlagen, daß das Ausgangsteil in seinem radial inneren Bereich einen axial abstehenden, rohrförmigen Fortsatz aufweist, der eine zentrische Öffnung des Eingangsteils durchdringt und mit seiner Stirnfläche in Reibkontakt an der ersten Seitenscheibe anliegt und daß axial zwischen einer zweiten der beiden Seitenscheiben und der Nabenscheibe eine axial wirkende Feder einer Leerlauf-Reibeinrichtung angeordnet und zwischen der zweiten Seitenscheibe und einer Anschlagschulter der Nabe eingespannt ist und die erste Seitenscheibe gegen die Stirnfläche des rohrförmigen Fortsatzes spannt. Das Ausgangsteil wird auf diese Weise zusätzlich zur Erzeugung einer Grundreibung ausgenutzt, die über den gesamten Verdrehwinkelbereich der Schwingungsdämpfer wirksam ist. Die Grundreibung wird zweckmäßigerweise so abgestimmt, daß sie der für den Leerlaufbetrieb erforderlichen Reibkraft entspricht.

Zur Erleichterung der Montage des Leerlauf-Drehschwingungsdämpfers, speziell bei einer automatisierten Montage, ist zweckmäßigerweise vorgesehen, daß am Eingangsteil, am Ausgangsteil und an der Nabenscheibe jeweils zumindest eine Führungsfläche für ein Führungswerkzeug angeformt ist und die Führungsflächen im belastungsfreien Zustand der Leerlauf-Feder in axialer Richtung zueinander ausgerichtet sind. Das Führungswerkzeug kann zum Ausrichten der Komponenten des Leerlaufdämpfers relativ zur Nabe problemlos in Achsrichtung eingeführt und auch wieder entfernt werden. Bei den Führungsflächen am Eingangsteil und am Ausgangsteil handelt es sich bevorzugt um nach radial außen offene Teilkreisflächen am Umfang des Eingangsteils und des Ausgangsteils. Diese Art von Führungsflächen benötigt in radialer Richtung keinen zusätzlichen Bauraum.

Bei Kupplungsscheiben, bei welchen zumindest eine der Last-Federn in einem Fenster der Nabenscheibe angeordnet ist, das in einer der beiden Relativdrehungen von Nabenscheibe und Seitenscheiben in Umfangsrichtung vergrößert ist und die Last-Feder in einem Teilbereich der Relativdrehung belastungsfrei hält, wird die Führungsfläche der Nabenscheibe zweckmäßigerweiSe durch eine Erweiterung des Fensters im Bereich seines in Umfangsrichtung gelegenen Endes gebildet. Die Führungsfläche kann dann an der ohnehin vorhandenen Randkante des Fensters angeformt werden.

Als besonders günstig hat es sich erwiesen, wenn zumindest ein Paar diametral sich gegenüberliegender Führungsflächen sowohl an dem Eingangsteil als auch an dem Ausgangsteil und an der Nabenscheibe vorgesehen ist. Mit einer solchen Anordnung läßt sich die Kupplungsscheibe schnell und sicher montieren. Das Eingangsteil und das Ausgangsteil des Leerlauf-Drehschwingungsdämpfers wird zweckmäßigerweise aus Polyamid hergestellt, das bevorzugt im Spritzgußverfahren verarbeitet wird und eine Beimischung kurzer Glasfasern und von PTFE (Polytetrafluorethylen) enthält. Die Materialzusammensetzung ist zweckmäßigerweise so gewählt, daß das Eingangsteil und das Ausgangsteil (in Gewichtsprozent) etwa 30 % Glasfasern und etwa 15 % PTFE enthält, wobei das Ausgangsteil zusätzlich etwa 2 % Silicon enthält. Eine solche Materialzusammensetzung ergibt einerseits die notwendige Festigkeit für die Drehmomentübertragung im Leerlaufbetrieb, hat die notwendige Temperaturbeständigkeit im Hinblick auf die zu erwartende Reibleistung und stellt gleichzeitig einen geeigneten Reibbeiwert ein. Die Festigkeit und die Temperaturbeständigkeit werden im wesentlichen durch das Polyamid in Verbindung mit dem Glasfaseranteil sichergestellt. Das PTFE sorgt unter anderem für eine Milderung der an sich verschleißfördernden Eigenschaften der Glasfaser, wodurch ein gleichmäßiger Reibbeiwert über die gesamte Lebensdauer erhalten bleibt. Das im Fall des Ausgangsteils beigemischte Silicon erniedrigt zusammen mit dem PTFE-Anteil den Reibbeiwert auf einen für die Grundreibung erwünschten niedrigen Wert in der Größenordnung von 0,18 bis 0,20. Da bei der Materialzusammensetzung des Eingangsteils der Siliconanteil fehlt, ergibt sich ein erhöhter Reibbeiwert von zum Beispiel 0,25. In Verbindung mit dem aufgrund der Gestaltung des Eingangsteils vergrößerten mittleren Reibradius und dem vergrößerten Reibbeiwert kann das Eingangsteil zusammen mit der aus Metall bestehenden Seitenscheibe die für den Lastbetrieb benötigte, erheblich höhere Reibkraft erzeugen.

Im folgenden wird die Erfindung anhand einer Zeichnung näher erläutert. Hierbei zeigt:

- Fig. 1 einen Axiallängsschnitt durch eine Kupplungsscheibe einer Kraftfahrzeug-Reibungskupplung;
- Fig. 2 eine Seitenansicht eines Ausgangsteil eines Leerlauf-Drehschwingungsdämpfers der Kupplungsscheibe;
- Fig. 3 eine Schnittansicht durch das Ausgangsteil, gesehen entlang einer Linie III-III in Fig. 2;
- Fig. 4 eine Detailansicht gemäß dem Pfeil IV in Fig. 3;
- Fig. 5 eine Seitenansicht eines Eingangsteils des Leerlauf-Drehschwingungsdämpfers;
- Fig. 6 eine Detailansicht des Eingangsteils gemäß einem Pfeil VI in Fig. 5;
- Fig. 7 eine weitere Detailansicht des Eingangsteils gemäß einem Pfeil VII in Fig. 6;
- Fig. 8 eine Schnittansicht des Eingangsteils gesehen entlang einer Linie VIII-VIII in Fig. 5;
- Fig. 9 eine weitere Detailansicht des Eingangsteils gemäß einem Pfeil IX in Fig. 8 und
- Fig. 10 eine Seitenansicht einer Nabenscheibe der Kupplungsscheibe.

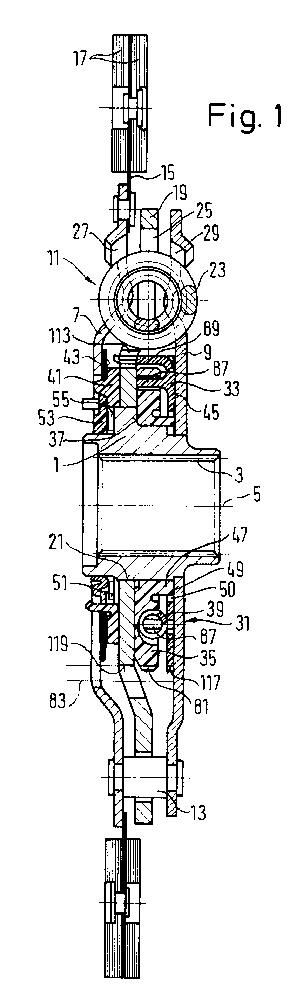

Fig. 1 zeigt den Gesamtaufbau einer Kupplungsscheibe gemäß der Erfindung. Die Kupplungsscheibe umfaßt eine Nabe 1 mit einer Innenverzahnung 3, über die die Nabe 1 drehfest, aber axial verschiebbar, mit einer nicht dargestellten Getriebe-Eingangswelle gekuppelt werden kann. Die Getriebewelle und sämtliche Einzelteile der Kupplungsscheibe sind zu einer Drehachse 5 konzentrisch angeordnet. An der Nabe 1 sind Seitenscheiben 7, 9 eines für den Lastbetrieb bemessenen Last-Drehschwingungsdämpfers 11 drehbar gelagert. Die in axialem Abstand voneinander angeordneten Seitenscheiben 7, 9 sind durch Abstandnieten 13 fest miteinander verbunden. An der Seitenscheibe 7 sind über eine Mitnehmerscheibe 15 Kupplungsreibbeläge 17 befestigt. Axial zwischen den Seitenscheiben 7, 9 ist eine Nabenscheibe 19 angeordnet, die über eine Verzahnung 21 an ihrem Umfang drehfest, jedoch mit einem vorbestimmten Drehspiel, mit der Nabe 1 gekuppelt ist. Der Lastdämpfer 11 umfaßt mehrere, in Umfangsrichtung verteilt angeordnete, für den Lastbetrieb bemessene Schraubenfedern 23, die die Seitenscheiben 7, 9 drehelastisch mit der Nabenscheibe 19 kuppeln. Fig. 1 zeigt lediglich eine der Federn 23, die jeweils in einem Fenster 25 der Nabenscheibe 19 und axial dazu fluchtenden Fenstern 27, 29 der Seitenscheiben 7, 9 sitzen.

Die Kupplungsscheibe umfaßt in den Bauraum einerseits radial zwischen der Nabe 1 und dem Anordnungsbereich der Lastfedern 23 und andererseits axial zwischen der Nabenscheibe 19 und der Seitenscheibe 9 einen für den Leerlaufbetrieb bemessenen Leerlauf-Drehschwingungsdämpfer 31, dessen Eingangsteil 33 drehfest mit der Nabenscheibe 19 gekuppelt ist und dessen Ausgangsteil 35 drehfest auf der Nabe 1 mittels einer Verzahnung gehalten ist und sich axial an einer zur Seitenscheibe 9 weisenden Schulter 37 der Nabe 1 abstützt. Für den Leerlaufbetrieb bemessene Schraubenfedern 39 kuppeln das Eingangsteil 33 in nachfolgend noch näher erläuterter Weise drehelastisch mit dem Ausgangsteil 35. Der Leerlaufdämpfer 31 ist hierbei innerhalb des Drehspiels der Verzahnung 21 bei einer Relativdrehung der Nabenscheibe 19 relativ zur Nabe 1 wirksam.

Auf der dem Leerlaufdämpfer 31 axial abgewandten Seite der Nabenscheibe 19 ist axial zwischen der Nabenscheibe 19 und der Seitenscheibe 7 ein mit der Seitenscheibe 7 drehfest, aber axial beweglich gekuppelter Reibring 41 vorgesehen, der von einer zwischen dem Reibring 41 und der Seitenscheibe 7 angeordneten Tellerfeder 43 gegen die Nabenscheibe 19 gespannt wird. Die Nabenscheibe 19 ist zusammen mit dem Eingangsteil 33 axial beweglich an der Nabe 1 geführt, so daß das Eingangsteil 33 mit einer ebenen Reibfläche 45 gegen die Innenseite der Seitenscheibe 9 gespannt wird. Der Reibring 41 und die Reibfläche 45 bilden zusammen mit der Tellerfeder 43 eine für den Lastbetrieb bemessene Reibeinrichtung, die bei einer Relativdrehung zwischen den Seitenscheiben 7, 9 und der Nabenscheibe 19 im Lastbetrieb wirksam ist.

Für eine im gesamten Drehwinkelbereich, einschließlich des Leerlaufbereichs, wirksame Grundreibung sorgt eine Leerlauf-Reibeinrichtung mit einer durch einen rohrförmigen Ansatz 47 am Innenumfang des Ausgangsteils 35 angeformten Reibfläche 49, an der die Innenseite der Seitenscheibe 9 anliegt. Der Ansatz 47 durchsetzt hierbei eine zentrische Öffnung 50 des Eingangsteils 33. Auf der dem Leerlaufdämpfer 31 axial abgewandten Seite der Nabenscheibe ist zwischen einer entgegengesetzt der Schulter 37 weisenden Schulter 51 der Nabe 1 und einem sowohl drehfest als auch in axialer Richtung fest mit der Seitenscheibe 7 verbundenen Lagerring 53 eine axial wirkende Wellfeder 55 eingespannt, die die Seitenscheibe 9 über die Abstandnieten 13 und die Seitenscheibe 7 gegen die Reibfläche 49 spannt.

Die Kupplungsscheibe arbeitet wie folgt:
Im Leerlaufbetrieb, d.h. bei verhältnismäßig geringen zu übertragenden Drehmomenten, bilden die Nabenscheibe 19 und die Seitenscheiben 7, 9 des Lastdämpfers 11 eine drehsteife Einheit, die sich innerhalb des Drehspiels der Verzahnung 21 relativ zur Nabe 1 drehen kann. Innerhalb des Drehspiels der Verzahnung 21 ist ausschließlich der Leerlaufdämpfer 31 wirksam, dessen Eingangsteil 33 drehfest mit der Nabenscheibe 19 verbunden ist bzw. dessen Ausgangsteil 35 drehfest mit der Nabe 1 verbunden ist. Die von der Wellfeder 55 über die Reibfläche 49 erzeugte Reibkraft bestimmt das Reibmoment im Leerlaufbetrieb.

Nach Ausgleich des Drehspiels der Verzahnung 21 ist der Leerlaufdämpfer 31 unwirksam und ausschließlich der Lastdämpfer 11 wirksam. Die Reibkraft wird einerseits durch die Reibfläche 49 und die Wellfeder 55 bestimmt und andererseits aufgrund der Relativdrehung zwischen Nabenscheibe 19 und Seitenscheiben 7, 9 im Lastbetrieb durch den an der Nabenscheibe 19 anliegenden Reibring 41 bzw. durch die an der Seitenscheibe 9 anliegende Reibfläche 45, die gemeinsam durch die Tellerfeder 43 vorgespannt werden.

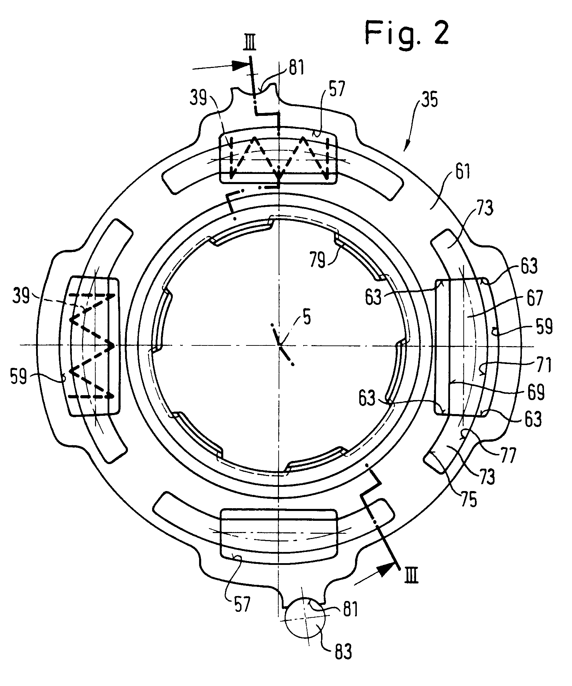

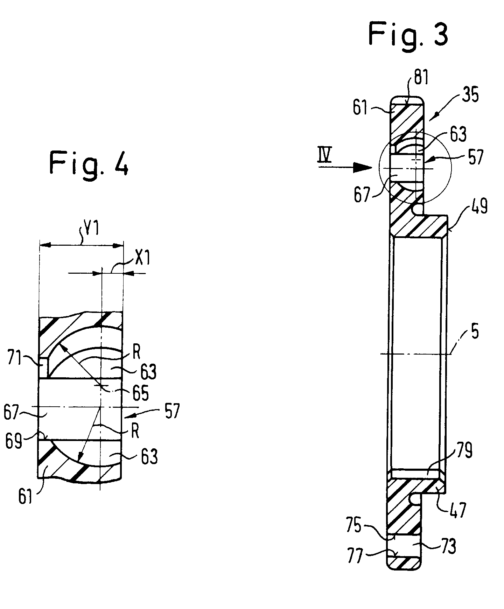

Im folgenden werden anhand der Fig. 2 bis 10 Einzelheiten des Leerlaufdämpfers 31 erläutert. Wie die Fig. 2 bis 4 zeigen, besteht das Ausgangsteil 35 des Leerlaufdämpfers 31 aus einem im wesentlichen scheibenförmigen, einstückigen Kunststoffteil, in das in Umfangsrichtung unterschiedlich lange Taschen 57, 59 zur Aufnahme der Schraubenfedern 39 eingeformt sind. Während die Taschen 57 die Schraubenfedern 39 in Umfangsrichtung ohne Spiel halten, sitzen die Federn 39 in den Taschen 59 mit einem Spiel in Umfangsrichtung. Die Taschen 57, 59 sind, wie die Fig. 3 und 4 am Beispiel der Taschen 57 zeigen, zur Seite des Eingangsteils 33 hin offen. Die Dicke Y1 des Ausgangsteils 35 ist in seinem scheibenförmigen Bereich 61 um ein Maß X1 größer als der halbe Windungsaußendurchmesser R der Schraubenfeder 39. Das Maß X1 ist hierbei kleiner als das Maß Y1. Die Taschen 57, 59 haben zumindest im Bereich ihrer in Umfangsrichtung gelegenen Endflächen 63 eine etwa kreissektorförmige Kontur, deren Kreismittelpunkt um das Maß X1 von der Seite des Eingangsteils 33 her in das Scheibenteil 61 hineinverlegt ist. Der durch die Kontur gebildete Radius R entspricht hierbei ungefähr dem halben Außendurchmesser der Schraubenfeder 39. In Umfangsrichtung im Mittelbereich der Taschen 57, 59 ist durch die Kreisbahnbewegung der kreisförmigen Enden der Schraubenfeder 39 der Radius R mit seinem Mittelpunkt 65 nach radial außen verlegt. Auf der dem Eingangsteil 33 axial gegenüberliegenden Seite münden die Taschen 57, 59 in Durchbrechungen 67, deren Form insbesondere aus Fig. 2 ersichtlich ist. Die Durchbrechungen 67 haben im Bereich der Endflächen 63 der Taschen 57, 59 eine radiale Höhe, die etwa dem Radius R der Schraubenfeder 39 entspricht. Nach radial innen sind die Durchbrechungen 67 durch eine in Umfangsrichtung geradlinig verlaufende Kontur 69 und nach radial außen durch eine um die Drehachse 5 gewölbte, konkave Kontur 71 begrenzt. In beiden Umfangsrichtungen sind sowohl die Taschen 57, 59 als auch die Durchbrechungen 67 durch Schlitze 73 verlängert, die nach radial innen und nach radial außen durch Kreisbogenabschnitte 75 bzw. 77 begrenzt sind. Fig. 3 zeigt ferner in Einzelheiten den rohrförmigen Fortsatz 47, der in einer achsnormalen, die Reibfläche 49 bildenden Stirnfläche endet. Radial innen ist das Ausgangsteil 35 mit einer Verzahnung 79 versehen, die auf einer komplementären Verzahnung der Nabe 1 ohne Spiel in Umfangsrichtung sitzt. Am Außenumfang trägt das Ausgangsteil 35 an zwei diametral gegenüberliegenden Stellen Führungsflächen 81, die bei der Montage als kreisrunde Stäbe 83 ausgebildete Führungswerkzeuge aufnehmen, die die Komponenten des Leerlaufdämpfers 31 relativ zur Nabenscheibe 19 ausrichten. Die Führungsflächen 81 sind als nach radial außen offene Teilkreisflächen am Umfang des Ausgangsteils 35 ausgebildet.

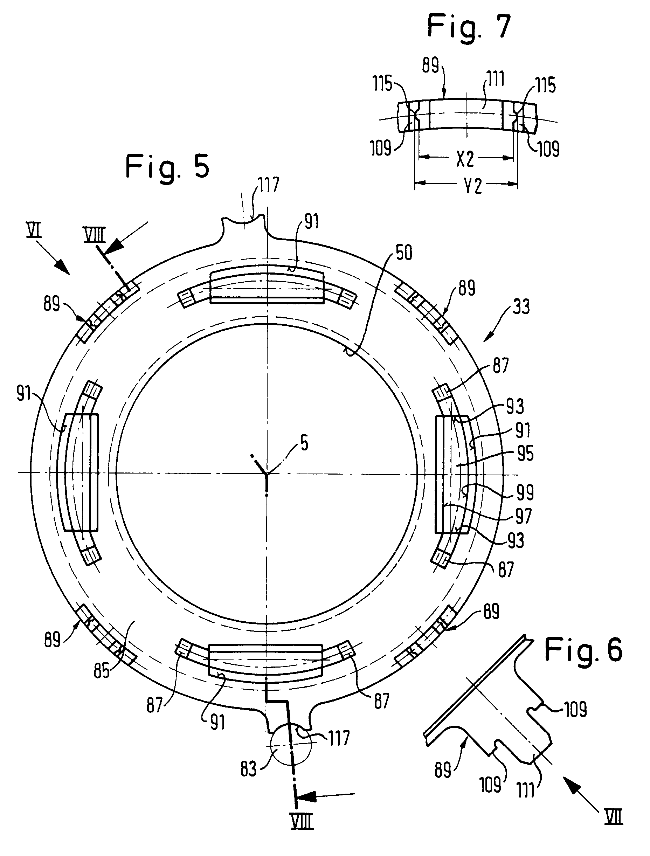

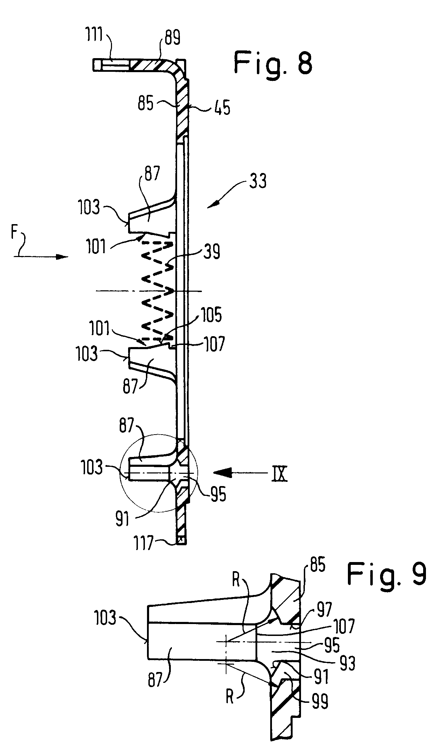

Das im einzelnen in den Fig. 5 bis 9 dargestellte Eingangsteil 33 des Leerlaufdämpfers 31 ist ebenfalls aus Kunststoff hergestellt und umfaßt ein relativ dünnwandiges, ringförmiges Scheibenteil 85, von dem in einem mittleren Bereich Fortsätze 87 und vom Bereich des Außenumfangs Stützelemente 89 in gleicher Richtung axial abstehen. Die Fortsätze 87 sind paarweise für den Eingriff in die Taschen 57 des Ausgangsteils 35 vorgesehen. Zwischen jedem Paar von Fortsätzen 87 sind in das Scheibenteil 85 weitere Taschen 91 eingeformt, die, wie am besten Fig. 9 zeigt, in Umfangsrichtung durch Endflächen 93 begrenzt sind. Die Endflächen 93 haben eine kreissektorförmige Kontur mit einem Radius R, der etwa gleich dem halben Außendurchmesser der Schraubenfedern 39 ist. Der Kreismittelpunkt des Radius R liegt etwa in der Mitte der axialen Erstreckung der Fortsätze 87. In axialer Richtung münden die Taschen 91 wiederum in Durchbrechungen 95, die radial innen durch eine in Umfangsrichtung geradlinig verlaufende Kontur 97 und radial außen durch eine um die Drehachse 5 herum gewölbte Kontur 99 begrenzt sind. Die radiale Höhe der Durchbrechung 95 entspricht im Bereich der Endflächen 93 etwa zwei Drittel des Radius R. Die Durchbrechungen 95 erleichtern die Herstellung des relativ dünnwandigen Eingangsteils 33 im Bereich der Taschen 91 und verringern zudem das Massenträgheitsmoment. Auch an dem Eingangsteil 33 sind in Umfangsrichtung unterschiedlich lange Taschen vorgesehen bei ansonsten gleicher Länge der Schraubenfedern 39.

Die zusammen mit den Endflächen 63 des Ausgangsteils 35 die Federn 39 steuernden Fortsätze 87 sind auf ihren der Feder 39 zugewandten Fläche jeweils mit einer Nase 101 versehen, die zur freien Stirnfläche 103 des Fortsatzes hin in eine Schräge 105 und zum Scheibenteil 85 hin in einen stufenförmigen Absatz 107 abfällt. Die Schräge 105 sorgt dafür, daß die Federn 39 in Richtung eines Pfeils F leicht in das Eingangsteil 33 eingesetzt werden können und dort durch den Absatz 107 der Nase 101 gehalten werden. Die axiale Länge der Fortsätze 87 ist groß genug, um die Stirnenden der Schraubenfeder 39 vollständig aufliegen zu lassen. Die Fortsätze 87 durchdringen die Durchbrechungen 67 des Ausgangsteils 39 vollständig und stützen sich mit ihren Stirnflächen 103 an der Nabenscheibe 19 ab. Bei einer Relativdrehung von Eingangsteil 33 und Ausgangsteil 35 können die Fortsätze 87 in die Schlitze 73 des Ausgangsteils 35 hinein ausweichen.

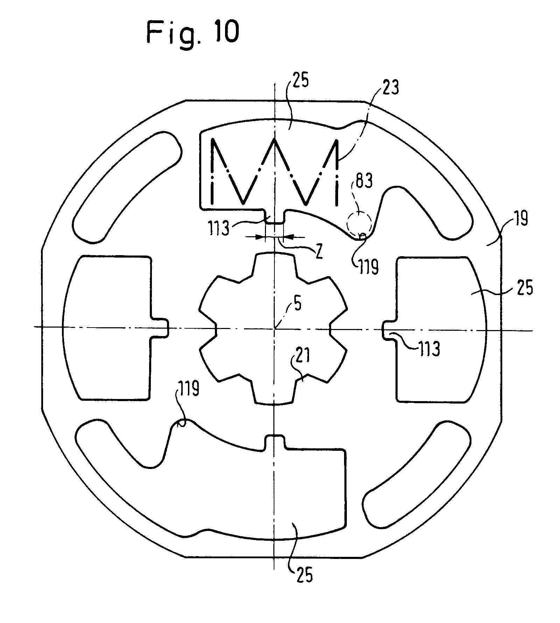

Die Stützelemente 89 sind auf einem größeren Durchmesser des Scheibenteils 85 angeordnet als die Fortsätze 87 und in Umfangsrichtung gegen die Fortsätze 87 versetzt. Einzelheiten der Stützelemente 89 ergeben sich insbesondere aus den Fig. 6 und 7. Jedes der Stützelemente 89 bildet in Umfangsrichtung einen Fuß, der in zwei Axialanschlägen 109 endet, mit welchen die Stützelemente 89 im eingebauten Zustand auf der Nabenscheibe 19 aufliegen. Zwischen den Axialanschlägen 109 stehen Fortsätze 111 ab, die im eingebauten Zustand in Öffnungen 113 (Fig. 10) der Nabenscheibe 19 eingreifen und das Eingangsteil 33 drehfest mit der Nabenscheibe verbinden. Um die Montage zu erleichtern, haben die Fortsätze 111 wie auch die Öffnungen 113 eine im wesentlichen rechteckförmige Querschnitts-Grundform. Die Öffnungen 113 sind in Umfangsrichtung etwas breiter ausgeführt als die entsprechende Rechteckabmessung des Fortsatzes 111. Die in Umfangsrichtung gelegenen Seitenflächen des Fortsatzes 111 sind jedoch zum Ausgleich mit in axialer Richtung längs verlaufenden Rippen 115 versehen, die eine geringe Überdeckung gegenüber den Seitenwänden der Öffnung 113 haben. Bei der Montage werden die Rippen 115 damit teilweise plastisch verformt, so daß sich eine drehfeste Verbindung ohne Spiel in Umfangsrichtung ergibt. Fig. 7 zeigt bei X2 die Abmessung des Grundkörpers des Fortsatzes 111 in Umfangsrichtung, während die beiden überstehenden Rippen 115 einen Abstand Y2 definieren. Die Öffnung 113 in der Nabenscheibe 19 (Fig. 10) hat eine Abmessung Z in Umfangsrichtung, die zwischen den beiden Maßen X2 und Y2 liegt. Fig. 8 zeigt ferner die auf der von den Fortsätzen 87 und den Stützelementen 89 axial abgewandten Seite des Scheibenteils 85 gebildete Reibfläche 45.

Am Außenumfang des Eingangsteils 33 sind an zwei etwa diametral gegenüberliegenden Stellen Führungsflächen 117 für das bereits im Zusammenhang mit dem Ausgangsteil 35 erwähnte Führungswerkzeug 83 angeformt. Bei den Führungsflächen 117 handelt es sich wiederum um nach radial außen offene Teilkreisflächen. Die Führungsflächen 117 sind so angebracht, daß sie im unbelasteten Zustand der Schraubenfedern 39 mit den Führungsflächen 81 des Ausgangsteils 35 korrespondieren.

Fig. 10 zeigt Einzelheiten der Nabenscheibe 19 und der zur Aufnahme der Schraubenfedern 23 bestimmten Fenster 25. Ein Paar der diametral sich gegenüberliegenden Fenster 25 sind für Schraubenfedern bestimmt, die beide in beiden Umfangsrichtungen gleichzeitig zum Einsatz kommen. Ein weiteres Paar der Fenster 25 sind in einer Umfangsrichtung verlängert, so daß bei der Relativdrehung zwischen Nabenscheibe 19 und Seitenscheiben 7, 9 die darin eingesetzten Schraubenfedern 23 in dieser Umfangsrichtung nicht oder erst nach Aufbrauch eines Drehspiels zum Einsatz kommen. In den verlängerten Bereichen dieser Fenster 25 sind wiederum Führungsflächen 119 angeformt, in die das bereits erwähnte Führungswerkzeug 83 bei der Montage eingreift und das Eingangsteil 33, das Ausgangsteil 35 relativ zur Nabenscheibe 19 ausrichtet. Die Anordnung der Führungsflächen 119 im Bereich der Endkanten der Fenster 25 ist besonders günstig, da hier keine separaten Öffnungen vorgesehen werden müssen, die ansonsten die Nabenscheibe 19 schwächen würden. Die Führungsflächen 119 sind im Bereich des Übergangs der radial inneren Kante in die Endkante des Fensters 25 vorgesehen. In der radial inneren Begrenzungskante sind darüber hinaus die Öffnungen 113 für den Eingriff der Stützelemente 89 angeordnet.

Das Eingangsteil 33 und das Ausgangsteil 35 des Leerlaufdämpfers 31 ist jeweils im Spritzgußverfahren aus Polyamid-Kunststoffmaterial hergestellt, wobei durch Beimischung von ca. 30 Gewichtsprozent Glasfasern mit einer kurzen Faserlänge eine ausreichende Festigkeit der Bauteile erzeugt wird. Das Kunststoffmaterial enthält weiterhin einen Anteil von ca. 15 % Polytetrafluorethylen (PTFE), das die aggressiven Eigenschaften der Glasfasern mildert und für konstante Reibeigenschaften über die Lebensdauer sorgt. Das Ausgangsteil 35 enthält weiterhin ca. 2 Gew.-% Silicon, welches zusammen mit dem PTFE-Anteil für einen konstanten und niedrigen Reibwert von etwa 0,18 bis 0,20 sorgt. Der Reibwert des Eingangsteils 33, dessen Kunststoffmaterial kein Silicon enthält, ist höher und liegt beispielsweise bei etwa 0,25. Aufgrund der vorstehenden Materialzusammensetzung können das Eingangsteil 33 und das Ausgangsteil 35 sehr einfach im Spritzgußverfahren hergestellt werden, wodurch trotz der relativ komplizierten Bauform eine preiswerte Massenfertigung ermöglicht wird. Die Materialzusammensetzung kann hohe Temperaturen aushalten, wie sie bei der Reibkrafterzeugung auftreten können, und ist zudem sehr abriebsfest.

## Patentansprüche

**1.** Kupplungsscheibe für eine Kraftfahrzeug-Reibungskupplung, umfassend
   - eine Nabe (1), die eine Drehachse (5) definiert,
   - einen für den Lastbetrieb bemessenen Last-Drehschwingungsdämpfer (11) mit zwei in axialem Abstand voneinander angeordneten, fest miteinander verbundenen, gleichachsig drehbar auf der Nabe (1) gelagerten Seitenscheiben (7, 9), einer axial zwischen den Seitenscheiben (7, 9) angeordneten Nabenscheibe (19), die insbesondere über eine Verzahnung (21) drehfest, jedoch mit einem begrenzten Drehspiel mit der Nabe (1) verbunden ist und mehreren, in Fenstern (25, 27, 29) der Seitenscheibe (7, 9) einerseits und der Nabenscheibe (19) andererseits sitzenden, in Umfangsrichtung verteilt angeordneten, für den Lastbetrieb bemessenen, insbesondere als Schraubenfeder ausgebildeten Last-Federn (23),
   - einen für den Leerlaufbetrieb bemessenen, innerhalb des begrenzten Drehspiels der Nabenscheibe (19) relativ zur Nabe (1) wirksamen Leerlauf-Drehschwingungsdämpfer (31) mit einem drehfest mit der Nabenscheibe (19) verbundenen Eingangsteil (33) aus Kunststoffmaterial, einem insbesondere über eine Verzahnung (79) drehfest mit der Nabe (1) verbundenen Ausgangsteil (35) und wenigstens einer diese Teile (33, 35) drehelastisch miteinander kuppelnden, für den Leerlaufbetrieb bemessenen, insbesondere als Schraubenfeder ausgebildeten Leerlauf-Feder (39), wobei eines (35) dieser beiden Teile eine in Umfangsrichtung langgestreckte, durch Endflächen (63) in Umfangsrichtung begrenzte Tasche (57, 59) für jede Leerlauf-Feder (39) und das andere (33) dieser beiden Teile in Umfangsrichtung im Abstand angeordnete, axial abstehende, in jede Tasche (57, 59) paarweise eingreifende Fortsätze (87) aufweist, die zusammen mit den Endflächen (63) die Leerlauf-Feder (39) zwischen sich einschließen, wobei sich an jede Tasche (57, 59) beiderseits in Umfangsrichtung bogenförmige Taschenverlängerungen (73) anschließen, in die hinein die Fortsätze (87) bei einer Relativdrehung von Eingangsteil (33) und Ausgangsteil (35) ausweichen, wobei das Eingangsteil (33) und das Ausgangsteil (35) einerseits radial zwischen der Nabe (1) und dem Anordnungsbereich der Last-Federn (23) und andererseits axial zwischen der Nabenscheibe (19) und einer ersten (9) der beiden Seitenscheiben angeordnet sind und das Ausgangsteil (35) im wesentlichen axial zwischen dem Eingangsteil (33) und der Nabenscheibe (19) liegt, und wobei das Eingangsteil eine ebene Reibfläche bildet, mit der es in Reibkontakt an der ersten Seitenscheibe anliegt sowie auf einem verglichen mit dem Durchmesser, auf dem die Fortsätze (87) angeordnet sind, größeren Durchmesser mehrere in Umfangsrichtung gegeneinander versetzte Stützelemente (89) aufweist, die zur drehfesten Verbindung des Eingangsteils (33) mit der Nabenscheibe (19) in Öffnungen (113) der Nabenscheibe (19) axial eingreifen und an der Nabenscheibe (19) anliegende Axialanschläge (109) umfassen,

- eine für den Lastbetrieb bemessene Last-Reibeinrichtung (41, 43, 45) mit einer zumindest die Reibfläche (45) des Eingangsteils (33) und die erste Seitenscheibe (9) axial gegeneinander spannende, axial wirkende Feder (43) und
- an einer (7) der Seitenscheiben gehaltene Kupplungs-Reibbeläge (17),

**dadurch gekennzeichnet,** daß das Ausgangsteil (35) einteilig aus Kunststoffmaterial hergestellt ist, an einem Axialanschlag (37) der Nabe (1) in Richtung zur Nabenscheibe (19) hin fixiert ist und die Taschen (57, 59) enthält und daß die Fortsätze (87) in Umfangsrichtung gegen die Stützelemente (89) versetzt zusammen mit den Stützelementen (89) einteilig an dem Eingangsteil (33) angeformt sind.

**2.** Kupplungsscheibe nach Anspruch 1, dadurch gekennzeichnet, daß die Tasche (57, 59) und die Taschenverlängerungen (73) zur Nabenscheibe (19) hin durchbrochen sind und daß die Fortsätze (87) des Eingangsteils (33) durch die Tasche (57, 59) bzw. die Taschenverlängerungen (73) axial hindurchreichen und mit ihren Stirnenden (103) an der Nabenscheibe (19) axial abgestützt anliegen.

**3.** Kupplungsscheibe nach Anspruch 1 oder 2, dadurch gekennzeichnet, daß das Ausgangsteil (35) zwischen den Endflächen (63) jeder Tasche (57, 59) eine die Tasche (57, 59) zur Nabenscheibe (19) hin öffnende, axiale Durchbrechung (67) umfaßt, deren radiale Höhe im Bereich der Endflächen (63) der Tasche (57, 59) etwa gleich dem halben Außendurchmesser der Leerlauf-Feder (39) ist.

**4.** Kupplungsscheibe nach Anspruch 3, dadurch gekennzeichnet, daß die axiale Durchbrechung (67) radial innen durch eine in Umfangsrichtung geradlinig verlaufende Fläche (69) und radial außen durch eine um die Drehachse (5) herum gewölbte Fläche (71) begrenzt ist.

**5.** Kupplungsscheibe nach Anspruch 3 oder 4, dadurch gekennzeichnet, daß die Taschenverlängerungen als axial durchgehende, durch radial innere und äußere Kreisbogenflächen (75, 77) begrenzte Schlitze (73) ausgebildet sind, in die die Durchbrechung (67) übergeht.

**6.** Kupplungsscheibe für eine Kraftfahrzeug-Reibungskupplung, umfassend

- eine Nabe (1), die eine Drehachse (5) definiert,
- einen für den Lastbetrieb bemessenen Last-Drehschwingungsdämpfer (11) mit zwei in axialem Abstand voneinander angeordneten, fest miteinander verbundenen, gleichachsig drehbar auf der Nabe (1) gelagerten Seitenscheiben (7, 9), einer axial zwischen den Seitenscheiben (7, 9) angeordneten Nabenscheibe (19), die insbesondere über eine Verzahnung (21) drehfest, jedoch mit einem begrenzten Drehspiel mit der Nabe (1) verbunden ist und mehreren, in Fenstern (25, 27, 29) der Seitenscheibe (7, 9) einerseits und der Nabenscheibe (19) andererseits sitzenden, in Umfangsrichtung verteilt angeordneten, für den Lastbetrieb bemessenen, insbesondere als Schraubenfeder ausgebildeten Last-Federn (23),
- einen für den Leerlaufbetrieb bemessenen, innerhalb des begrenzten Drehspiels der Nabenscheibe (19) relativ zur Nabe (1) wirksamen Leerlauf-Drehschwingungsdämpfer (31) mit einem drehfest mit der Nabenscheibe (19) verbundenen Eingangsteil (33) aus Kunststoffmaterial, einem insbesondere über eine Verzahnung (79) drehfest mit der Nabe (1) verbundenen Ausgangsteil (35) und wenigstens einer diese Teile (33, 35) drehelastisch miteinander kuppelnden, für den Leerlaufbetrieb bemessenen, insbesondere als Schraubenfeder ausgebildeten Leerlauf-Feder (39),
wobei eines (35) dieser beiden Teile eine in Umfangsrichtung langgestreckte, durch Endflächen (63) in Umfangsrichtung begrenzte Tasche (57, 59) für jede Leerlauf-Feder (39) und das andere (33) dieser beiden Teile in Umfangsrichtung im Abstand angeordnete, axial abstehende, in jede Tasche (57, 59) paarweise eingreifende Fortsätze (87) aufweist, die zusammen mit den Endflächen (63) die Leerlauf-Feder (39) zwischen sich einschließen,
wobei sich an jede Tasche (57, 59) beiderseits in Umfangsrichtung bogenförmige Taschenverlängerungen (73) anschließen, in die hinein die Fortsätze (87) bei einer Relativdrehung von Eingangsteil (33) und Ausgangsteil (35) ausweichen,
wobei das Eingangsteil (33) und das Ausgangsteil (35) einerseits radial zwischen der Nabe (1) und dem Anordnungsbereich der Last-Federn (23) und andererseits axial zwischen der Nabenscheibe (19) und einer ersten (9) der beiden Seitenscheiben angeordnet sind und das Ausgangsteil (35) im wesentlichen axial zwischen dem Eingangsteil (33) und der Nabenscheibe (19) liegt,
und wobei das Eingangsteil eine ebene Reibfläche bildet, mit der es in Reibkontakt an der ersten Seitenscheibe anliegt sowie auf einem verglichen mit dem Durchmesser, auf dem die Fortsätze (87) angeordnet sind, größeren Durchmesser mehrere in Umfangsrichtung gegeneinander versetzte Stützelemente (89) aufweist, die zur drehfesten Verbindung des Eingangsteils (33) mit der Nabenscheibe (19) in Öffnungen (113) der Nabenscheibe (19) axial eingreifen und an der Nabenscheibe (19) anliegende Axialanschläge (109) umfassen,

- eine für den Lastbetrieb bemessene Last-Reibeinrichtung (41, 43, 45) mit einer zumindest die Reibfläche (45) des Eingangsteils (33) und die erste Seitenscheibe (9) axial gegeneinander spannende, axial wirkende Feder (43) und
- an einer (7) der Seitenscheiben gehaltene Kupplungs-Reibbeläge (17),

**dadurch gekennzeichnet,** daß das Ausgangsteil (35) einteilig aus Kunststoffmaterial hergestellt ist, an einem Axialanschlag (37) der Nabe (1) in Richtung zur Nabenscheibe (19) hin fixiert ist und die Taschen (57, 59) enthält und daß die Fortsätze (87) in Umfangsrichtung gegen die Stützelemente (89) versetzt zusammen mit den Stützelementen (89) einteilig an dem Eingangsteil (33) angeformt sind.

**7.** Kupplungsscheibe nach Anspruch 6, dadurch gekennzeichnet, daß jede Nase (101) auf ihrer axial zum freien Ende (103) des Fortsatzes (87) gelegenen Seite eine Einführschräge (105) für das Ende der Schraubenfeder (39) und auf ihrer dem freien Ende (103) des Fortsatzes (87) axial entfernt gelegenen Seite einen Rastabsatz (107) aufweist.

**8.** Kupplungsscheibe nach einem der Ansprüche 1 bis 7, dadurch gekennzeichnet, daß das Ausgangsteil (35) jede für den Eingriff der Fortsätze (87) bestimmte Tasche (57, 59) enthält und zumindest in dem die Tasche (57, 59) enthaltenden Durchmesserbereich als ebene Scheibe (61) ausgeführt ist, deren axiale Dicke (Y1) um ein verglichen mit der Dicke (Y1) kleineres Maß (X1) größer ist als der halbe Außendurchmesser (R), der von der Tasche (57, 59) aufgenommenen Leerlauf-Feder (39) ist
und daß jede Tasche (57, 59) in Umfangsrichtung durch Endflächen (63) mit kreissektorförmiger Kontur begrenzt ist, deren Kreismittelpunkt angenähert einen dem genannten Maß (X1) entsprechenden Abstand von der dem Eingangsteil (33) benachbarten Seitenfläche der Scheibe (61) hat und deren Kreisradius etwa gleich dem halben Außendurchmesser der Leerlauf-Feder (39) ist.

**9.** Kupplungsscheibe nach einem der Ansprüche 1 bis 8, dadurch gekennzeichnet, daß die für den Eingriff der Fortsätze (87) bestimmten Taschen (57, 59) am Ausgangsteil (35) und die Fortsätze (87) am Eingangsteil (33) vorgesehen sind und daß das Eingangsteil (33) in Umfangsrichtung zwischen jedem Paar die Leerlauf-Feder (39) haltender Fortsätze (87) eine weitere Tasche (91) aufweist, die in Umfangsrichtung durch Endflächen (93) begrenzt ist, welche eine kreissektorförmige Kontur haben, deren Radius etwa gleich dem halben Außendurchmesser der Leerlauf-Feder (39) ist und deren Kreismittelpunkt ungefähr in der Mitte der axialen Erstreckung der Fortsätze (87) liegt.

**10.** Kupplungsscheibe nach Anspruch 9, dadurch gekennzeichnet, daß die weitere Tasche (91) auf der axial der ersten Seitenscheibe (9) zugewandten Seite in eine Durchbrechung (95) mündet, deren radiale Höhe im Bereich der Endflächen (93) ungefähr gleich zwei Drittel des Kreissektorradius ist.

**11.** Kupplungsscheibe nach Anspruch 10, dadurch gekennzeichnet, daß die Durchbrechung (95) der weiteren Taschen (91) radial innen durch eine in Umfangsrichtung geradlinig verlaufende Fläche (97) und radial außen durch eine um die Drehachse (5) gekrümmte Fläche (99) begrenzt ist.

**12.** Kupplungsscheibe nach einem der Ansprüche 1 bis 12, dadurch gekennzeichnet, daß die Stützelemente (87) und die Öffnungen (113) der Nabenscheibe (19), in die sie eingreifen, angenähert rechteckförmigen Querschnitt haben und daß an zumindest einer axial verlaufenden Längsseite jedes Stützelements (87) eine axial verlaufende Rippe (115) angeformt ist, die die Kontur der Öffnung (113) teilweise überdeckt und sich bei der Montage des Eingangsteils (33) an der Nabenscheibe (19) plastisch verformt.

**13.** Kupplungsscheibe nach einem der Ansprüche 1 bis 12, dadurch gekennzeichnet, daß das Ausgangsteil (35) in seinem radial inneren Bereich einen axial abstehenden, rohrförmigen Fortsatz (47) aufweist, der eine zentrische Öffnung (50) des Eingangsteils (33) durchdringt und mit seiner Stirnfläche (49) in Reibkontakt an der ersten Seitenscheibe (9) anliegt
und daß axial zwischen einer zweiten (7) der beiden Seitenscheiben und der Nabenscheibe (19) eine axial wirkende Feder (55) einer Leerlauf-Reibeinrichtung angeordnet und zwischen der zweiten Seitenscheibe (7) und einer Anschlagschulter (51) der Nabe (1) eingespannt ist und die erste Seitenscheibe (9) gegen die Stirnfläche (49) des rohrförmigen Fortsatzes (47) spannt.

**14.** Kupplungsscheibe nach einem der Ansprüche 1 bis 13, dadurch gekennzeichnet, daß am Eingangsteil (33), am Ausgangsteil (35) und an der Nabenscheibe (19) jeweils zumindest eine Führungsfläche (81, 117, 119) für ein Führungswerkzeug (83) angeformt ist und die Führungsflächen (81, 117, 119) im belastungsfreien Zustand der Leerlauf-Feder (39) in axialer Richtung zueinander ausgerichtet sind.

**15.** Kupplungsscheibe nach Anspruch 14, dadurch gekennzeichnet, daß die Führungsflächen (81, 117) des Eingangsteils (33) und des Ausgangsteils (35) als nach radial außen offene Teilkreisflächen am Umfang des Eingangsteils (33) und des Ausgangsteils (35) ausgebildet sind.

**16.** Kupplungsscheibe nach Anspruch 14 oder 15, dadurch gekennzeichnet, daß zumindest eine der Last-Federn (23) in einem Fenster (25) der Nabenscheibe (19) angeordnet ist, das in einer der beiden Relativdrehrichtungen von Nabenscheibe (19) und Seitenscheiben (7, 9) in Umfangsrichtung vergrößert ist und die Last-Feder (23) in einem Teilbereich der Relativdrehung belastungsfrei hält und daß die Führungsfläche (119) der Nabenscheibe (19) durch eine Erweiterung des Fensters (25) im Bereich seines in Umfangsrichtung gelegenen, einen Anschlag für die Last-Feder (23) bildenden Endes gebildet ist.

**17.** Kupplungsscheibe nach einem der Ansprüche 14 bis 16, dadurch gekennzeichnet, daß zumindest ein Paar diametral sich gegenüberliegende Führungsflächen (81, 117, 119) sowohl an dem Eingangsteil (33) als auch an dem Ausgangsteil (35) und an der Nabenscheibe (19) vorgesehen ist.

**18.** Kupplungsscheibe nach einem der Ansprüche 1 bis 17, dadurch gekennzeichnet, daß das Eingangsteil (33) und/oder das Ausgangsteil (35) aus Polyamid hergestellt ist, das ungefähr 30 % Glasfaser und ungefähr 15 % Polytetrafluorethylen enthält, wobei das Ausgangsteil (35) zusätzlich ungefähr 2 % Silikon enthält.

Fig. 1
17
15
19
25
27
29
11
23
7
89
113
9
43
87
41
33
55
45
53
37
1
3
5
21
47
49
51
50
39
31
87
119
35
117
83
81
13

Fig. 2
III
81
39
57
35
61
73
79
63
63
67
39
5
59
71
59
69
63
63
77
73
75
57
III
81
83

Fig. 4
Y1
X1
71
R
63
65
67
57
69
R
63
61

Fig. 3
81
61
35
63
IV
57
67
49
5
79
47
75
73
77

Fig. 7
89
111
115
115
109
109
X2
Y2
Fig. 5
117
VI
VIII
91
50
89
89
33
87
91
93
91
5
95
99
97
93
87
89
89
85
87
91
87
117
83
VIII
Fig. 6
109
89
109
111
VII

Fig. 8
111
89
85
45
87
33
103
F
101
39
105
101
107
103
87
87
103
IX
95
91
117
Fig. 9
R
85
97
103
107
95
93
87
91
R
99

Fig. 10
25
23
83
19
113
Z
119
25
5
113
21
119
25